# EUROPÄISCHE PATENTANMELDUNG

(11) **EP 1 170 899 A2**
(43) Veröffentlichungstag der Anmeldung: **09.01.2002**
(21) Anmeldenummer: 01113929.2
(22) Anmeldetag: 07.06.2001
(51) Int. Cl.: H04L 12/24

(54) **Verfahren und Vorrichtung zur Verwaltung eines Telekommunikationssystems**

(30) Priorität: 04.07.2000 DE 10032416
(71) Anmelder: SIEMENS AKTIENGESELLSCHAFT, 80333 München (DE)
(72) Erfinder: Ramirez, Jorge-Alberto Perez, Santa Clara, CA 95050 (US)

(57) **Zusammenfassung**

Die vorliegende Erfindung betrifft einen Server (1) für ein-vorzugsweise privates - Kommunikationsnetz mit mehreren, untereinander vernetzten Kommunikationsanlagen, mit einer ersten Steuerungseinrichtung (12) zum zentralen Steuern von Leistungsmerkmalen im Kommunikationsnetz, und eine Kommunikationsanlage (2) zur Verwendung mit diesem Server (1).

Weiterhin betrifft die vorliegende Erfindung ein Verfahren zur Steuerung von Leistungsmerkmalen in einem - vorzugsweise privaten - Kommunikationsnetz.

## Beschreibung

Die vorliegende Erfindung betrifft insbesondere einen Server für ein Kommunikationsnetz, eine Kommunikationsanlage zur Verwendung mit diesem Server und ein Verfahren zur Steuerung von Leistungsmerkmalen in einem Kommunikationsnetz.

In privaten Kommunikationsnetzen werden Kommunikationsanlagen zunehmend über Rechnernetze - beispielsweise ein LAN (Local Area Network) - miteinander vernetzt, wobei eine Datenübertragung im Kommunikationsnetz gemäß dem bekannten IP-Protokoll (Internet Protokoll) realisiert wird. Den Benutzern des Kommunikationsnetzes werden dabei in der Regel netzwerkweite Leistungsmerkmale , wie z. B. Parken und Übernehmen einer geparkten Verbindung, Bereitstellen von Kurzwahlzielen, usw. zur Verfügung gestellt.

Eine Ablaufsteuerung der Leistungsmerkmale erfolgt dabei in der Regel lokal durch die eine der Kommunikationsanlagen. Die Leistungsmerkmale werden dabei beispielsweise durch die Übertragung von Meldungen gemäß eines kommunikationsanlagen-spezifischen Protokolls realisiert und aktiviert. Darüber hinaus können Leistungsmerkmale zwischen den einzelnen Kommunikationsanlagen durch ein Einrichten von virtuellen Ports in den Kommunikationsanlagen mittels einer sogenannten DISA-Funktionalität (Direct Inward System Access) realisiert werden, bei der ein Teilnehmer durch DISA-spezifische Meldungen von außerhalb des privaten Kommunikationsnetzes Leistungsmerkmale der Kommunikationsanlage aktivieren kann.

Ein Nachteil dieser Lösung besteht darin, daß bei der Aktivierung von netzweiten Leistungsmerkmalen in einem privaten Kommunikationsnetz in den beteiligten Netzknoten (Kommunikationsanlagen) Ressourcen, wie beispielsweise Speicherplatz und Prozessorleistung, belegt werden. Da im IP-Protokoll nur eine eingeschränkte Anzahl von Leistungsmerkmalen definiert sind, bietet die beschriebene Lösung des weiteren auch nur eine eingeschränkte Verfügbarkeit von Leistungsmerkmalen gegenüber einem privaten Kommunikationsnetz mit nur einer Kommunikationsanlage, bei der eine Vielzahl von Leistungsmerkmalen durch kommunikationsanlagen-spezifische Protokolle definiert sind.

Die Aufgabe der vorliegenden Erfindung ist somit, eine Vorrichtung und ein Verfahren bereitzustellen, bei denen eine Einsparung von Ressourcen in den einzelnen Kommunikationsanlagen und eine erweiterte Funktionalität von netzwerkweiten Leistungsmerkmalen in einem Rechnernetz ermöglicht wird.

Diese Aufgabe wird durch einen Server für ein privates Kommunikationsnetz gemäß dem beigefügten Anspruch 1, eine Kommunikationsanlage zur Verwendung mit diesem Server gemäß dem beigefügten Anspruch 8 und ein Verfahren zur Steuerung von Leistungsmerkmalen in einem privaten Kommunikationsnetz gemäß dem beigefügten Anspruch 12 gelöst.

Gemäß der vorliegenden Erfindung wird zur Steuerung und Aktivierung von netzwerkweiten Leistungsmerkmalen ein Server eingesetzt. Der Server übernimmt dabei erfindungsgemäß die Signalisierungssteuerung, die zur Durchführung von ausgewählten, zwischen den Kommunikationsanlagen übergreifenden netzwerkweiten Leistungsmerkmalen notwendig ist.

Die erfindungsgemäße Kommunikationsanlage - in der Literatur in diesem Zusammenhang häufig auch als 'Client' bezeichnet - realisiert erfindungsgemäß mittels eines geeigneten Kommunikationsprotokolls zusammen mit dem Server Leistungsmerkmale lokal oder mit anderen Kommunikationsanlagen im Kommunikationsnetz.

Durch die erfindungsgemäße Zentralisierung der Steuerung von Leistungsmerkmalen in einem privaten Kommunikationsnetz, d.h. die Verlagerung von Funktionen auf einen Server, ergeben sich folgende Vorteile:

In den einzelnen Kommunikationsanlagen müssen zur Realisierung der Leistungsmerkmale lokal weniger Ressourcen, wie z.B. Speicherplatz und Prozessorleistung, zur Verfügung gestellt werden.

Weiterhin ist die Implementierung von neuen Leistungsmerkmalen einfacher und schneller realisierbar, da die Leistungsmerkmale für das gesamte Kommunikationsnetz im wesentlichen im Server implementiert werden.

Leistungsmerkmale, die von Vernetzungsprotokollen - z.B. dem IP-Protokoll - nach dem Stand der Technik nicht verfügbar sind, können nun von einer größeren Anzahl von Benutzern (Teilnehmern) genutzt werden. Somit ergibt sich eine Erweiterung des Umfanges von Leistungsmerkmalen in einem privaten Kommunikationsnetz mit mehreren untereinander vernetzten Kommunikationsanlagen. Das entsprechende Leistungsmerkmal ist nicht nur auf einer einzelnen Kommunikationsanlage verfügbar, sondern steht über den Server durch entsprechende Kommunikationsmechanismen netzweit zur Verfügung.

Vorteilhafte Weiterbildungen der Erfindung sind in den Unteransprüchen angegeben.

Zur Steuerung der Leistungsmerkmale werden zwischen dem Server und einer oder mehreren Kommunikationsanlagen Signalisierungsmeldungen generiert und ausgewertet. Die Signalisierungsmeldungen enthalten dabei beispielsweise Informationen über die Art des zu aktivierenden Leistungsmerkmales und/oder Daten, die in Verbindung mit diesem Leistungsmerkmal abgespeichert werden müssen. Diese Aufgaben werden dabei von einer ersten Steuerungseinrichtung im erfindungsgemäßen Server bzw. einer zweiten Steuerungseinrichtung in der erfindungsgemäßen Kommunikationsanlage ausgeführt. Die Übertragung der Signalisierungsmeldungen erfolgt durch den Server über die erste Schnittstelle bzw. durch die Kommunikationsanlage über die zweite Schnittstelle.

Der Server weist zusätzlich eine Speichervorrichtung zum permanenten und/oder temporären Speichern von Daten auf, die zur Durchführung des jeweiligen Leistungsmerkmales benötigt werden. Solche Daten sind z. B. Telefonnummern für das bekannte Leistungsmerkmal "Kurzwahlziele" (permanent) oder Daten über eine Verbindung für das bekannte Leistungsmerkmal "Halten" (temporär).

In einer Ausgestaltung der vorliegenden Erfindung führt der Server bzw. die erste Steuerungseinrichtung des Servers Leistungsmerkmale aus, die lediglich eine Kommunikationsanlage betreffen, wie z. B. das Leistungsmerkmal "Kurzwahlziele", bei dem ein Teilnehmer via Kurzwahl eine Verbindung zu einem weiteren Teilnehmer herstellt.

In einer weiteren Ausgestaltung der vorliegenden Erfindung führt der Server bzw. die erste Steuerungseinrichtung des Servers Leistungsmerkmale aus, die mehrere Kommunikationsanlagen betreffen, wie z. B. beim Leistungsmerkmal "Halten" und "Übernahme", wobei ein Teilnehmer, der an einer Kommunikationsanlage angeschlossen ist, eine Verbindung im System parkt und ein anderer Teilnehmer, der an einer weiteren Kommunikationsanlage angeschlossen ist, dieses Gespräch übernimmt.

Vorteilhafterweise sind die einzelnen Kommunikationsanlagen untereinander und die Kommunikationsanlagen mit dem Server über ein lokales Netzwerk (LAN, Local Area Network) miteinander vernetzt, wobei die Datenübertragung über das lokale Netzwerk mittels des IP-Protokolls realisiert wird. Der Server ist dabei über die erste Schnittstelle und die Kommunikationsanlagen über jeweils eine zweite Schnittstelle mit dem Netzwerk verbunden.

Die vorliegende Erfindung wird nachfolgend anhand bevorzugter Ausführungsbeispiele unter Bezugnahme auf die beigefügten Zeichnungen näher erläutert.

Dabei zeigen:
- Fig. 1:: eine schematische Darstellung des erfindungsgemäßen Servers und einer erfindungsgemäßen Kommunikationsanlage in einem privaten Kommunikationsnetz; und
- Fig. 2 bis 6:: Ausführungsbeispiele der Erfindung.

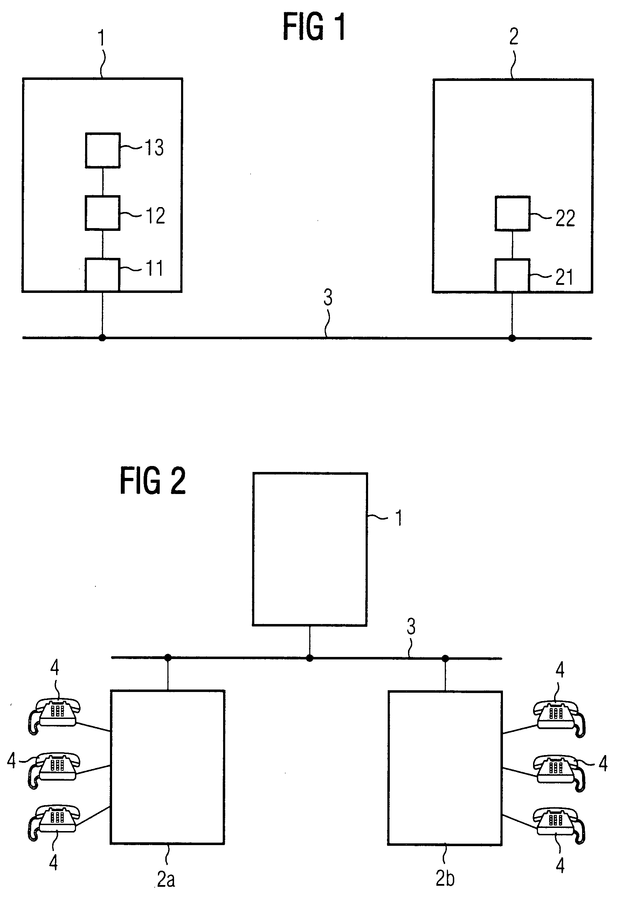

Fig. 1 zeigt eine schematische Darstellung eines erfindungsgemäßen Servers 1 der über ein lokales Netzwerk 3 mit einer Mehrzahl von Kommunikationsanlagen verbunden ist. Beispielhaft ist eine erfindungsgemäße Kommunikationsanlage 2 dargestellt.

Der erfindungsgemäße Server 1 weist eine erste Schnittstelle 11 zur Verbindung mit dem lokalen Netzwerk 3 (LAN) auf. Des weiteren umfaßt der Server 1 eine erfindungsgemäße erste Steuerungseinrichtung 12 zum zentralen Steuern und Durchführen von Leistungsmerkmalen im lokalen Netzwerk 3 und eine Speichervorrichtung 13 zum zentralen Abspeichern von Daten.

Die erfindungsgemäße Kommunikationsanlage 2 weist eine zweite Schnittstelle 21 zur Verbindung mit dem lokalen Netzwerk 3 und eine erfindungsgemäße zweite Steuerungseinrichtung 22 zum Steuern und Durchführen von Leistungsmerkmalen unter Zusammenwirkung mit dem Server 1 auf.

Die erfindungsgemäße erste und zweite Steuerungseinrichtung 12, 22 sind dabei vorteilhafterweise als programmgesteuerte Steuerungseinrichtungen ausgelegt, so daß eine Steuerung anhand einer im Server 1 bzw. in der Kommunikationsanlage 2 implementierten Software erfolgt.

Die Fig. 2 bis 6 zeigen Ausführungsbeispiele der vorliegenden Erfindung.

Fig. 2 zeigt ein - vorzugsweise privates - Kommunikationsnetz mit einem erfindungsgemäßen Server 1 und zwei erfindungsgemäßen Kommunikationsanlagen 2a und 2b, wobei der Server 1 und die Kommunikationsanlagen 2a, 2b über ein lokales Netzwerk 3 miteinander verbunden sind. Die zur Steuerung der Leistungsmerkmale ausgestaltete Komponenten des Servers 1 wird im weiteren als NLM-Server 1 und die zur Steuerung der Leistungsmerkmale ausgestaltete Komponenten einer Kommunikationsanlage 2a, 2b werden im weiteren als NLM-Client 2a, 2b bezeichnet, wobei NLM als Abkürzung für netzwerkweites Leistungsmerkmal steht.

Die Kommunikationsanlagen 2a, 2b werden jeweils über eine die zweite Schnittstelle 21 bereitstellende, netzwerk-spezifische Anschluß-Baugruppe an das lokale Netzwerk 3 angeschlossen. Die Kommunikationsanlagen 2a, 2b beinhalten jeweils eine Software zur Steuerung der Kommunikationsanlage 2a, 2b und zusätzlich eine Software zur Steuerung der jeweiligen NLM-Clients 2a, 2b und lokale Datenbasis zur Speicherung von permanenten oder temporären Daten. An die Kommunikationsanlagen 2a, 2b sind analoge und/oder digitale (ISDN) Endgeräte 4 - beispielsweise Telefone oder Datenverarbeitungseinrichtungen (z.B. ein Personal Computer PC) - anschließbar.

Auf dem NLM-Server 1 sind beispielsweise CTI- (Computer Telephony Integration) und Administrationsanwendungen, wie z. B. Spracherkennungsanwendungen, integriert. Des weiteren wird durch den NLM-Server 1 eine netzweite Datenbasis zur Verfügung stellt.

Wie eingangs beschrieben, können Leistungsmerkmale zwischen den einzelnen Kommunikationsanlagen 2a, 2b weiterhin nach dem Stand der Technik, beispielsweise durch das Übertragen von kommunikationsanlagen-spezifischen Signalisierungsmeldungen über eine Kommunikationsnetz realisiert werden. Zusätzlich können Leistungsmerkmale jedoch auch gemäß der vorliegenden Erfindung mittels eines sogenannten NLM-Server/Client-Konzeptes realisiert werden.

Mit dem erfindungsgemäßen Konzept zur Realisierung von Leistungsmerkmalen lassen sich sowohl Standardleistungsmerkmale (z. B. das Leistungsmerkmal "Parken") realisieren als auch Zugriffe über den NLM-Server 1 auf eine zentrale Datenbank oder eine zentrale Speichervorrichtung vornehmen, um speicherintensive Informationen außerhalb der NLM-Clients 2a, 2b zentral abzuspeichern (z. B. Kurzwahlziele, projektbezogene Kennziffern, Telefonlisten usw.).

Ebenfalls kann auf dem NLM-Server 1 eine Funktionalität realisiert werden, die der bereits beschriebenen DISA-Funktionalität entspricht. Weiterhin können neue DISA-Leistungsmerkmale realisiert werden.

Durch das erfindungsgemäße Server/Client-Konzept zur Realsierung von Leistungsmerkmalen sind aufgrund der Integration von Kommunikationsanlage und PC neuartige Leistungsmerkmale denkbar, die von den bisherigen Protokollen nicht unterstützt werden.

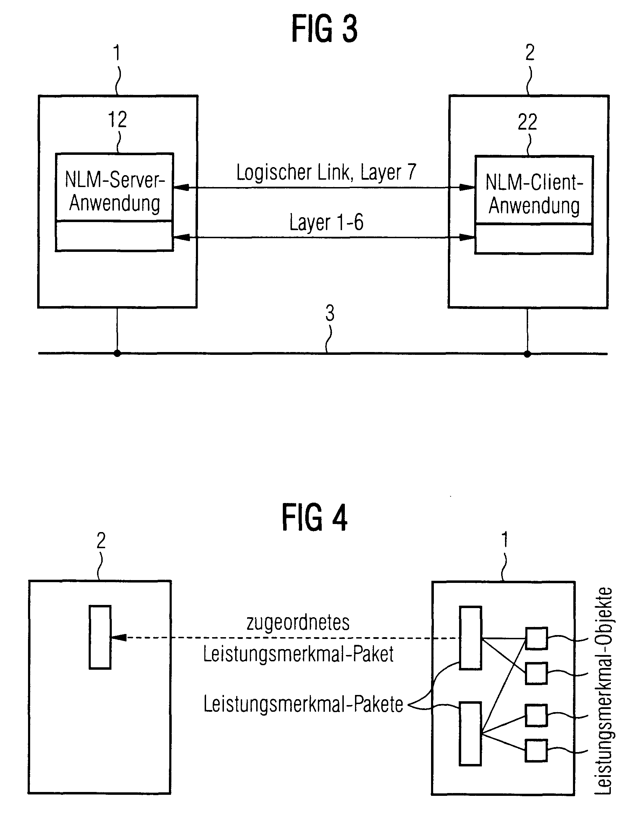

Anhand der Fig. 3 wird nachfolgend das erfindungsgemäße NLM-Server/Client-Konzept näher erläutert.

Zur Realisierung dieses Konzeptes werden miteinander kommunizierende Komponenten zwischen dem NLM-Server 1 und den NLM-Clients 2a, 2b benötigt. Beispielhaft ist eine NLM-Server-Anwendung - die erste Steuerungseinrichtung 12 - auf dem NLM-Server 1 und zum anderen eine NLM-Client-Anwendung - die zweite Steuerungseinrichtung 22 - auf den NLM-Clients 2a, 2b dargestellt. Eine logische Verbindung - in der Literatur häufig als 'Link' bezeichnet - zwischen den beiden Komponenten wird dabei über ein komponenten-spezifisches Protokoll realisiert.

Zur Durchführung der Funktionalität der netzwerkweiten Leistungsmerkmale stellt die NLM-Server-Anwendung den NLM-Clients 2a, 2b jeweils eine bestimmte Menge von Leistungsmerkmal-Objekten zur Verfügung, wobei jedes Leistungsmerkmal-Objekt einem Leistungsmerkmal entspricht, wie nachfolgend in Fig. 4 gezeigt wird.

Jedem Leistungsmerkmal-Objekt sind dabei bestimmte Merkmale - wie z. B. "Reichweite" des Leistungsmerkmales (nur lokal oder netzwerkweit), "zeitliche Durchführbarkeit eines Leistungsmerkmals" (nur für die aktuelle Verbindung oder für alle Verbindungen), usw. - zugeordnet. Diese Merkmale sind individuell konfigurierbar und dienen der Durchführung des jeweiligen Leistungsmerkmals auf den jeweiligen NLM-Clients 2a, 2b.

Nach festgelegten Regeln werden zusammenhängende Leistungsmerkmal-Objekte in sogenannten Leistungsmerkmal-Paketen zusammengefaßt. Diese Leistungsmerkmal-Pakete werden den jeweiligen NLM-Clients 2a, 2b durch den NLM-Server 1 zur Verfügung gestellt, so daß der jeweilige NLM-Client 2a, 2b weiß, welche Leistungsmerkmale er in welchem Umfang durchführen kann/darf. Damit der jeweilige NLM-Client 2a, 2b auf den NLM-Server 1 zugreifen kann, muß den NLM-Clients 2a, 2b die IP-Adresse des NLM-Servers 1 und die Port-Adresse der NLM-Server-Applikation bekannt sein.

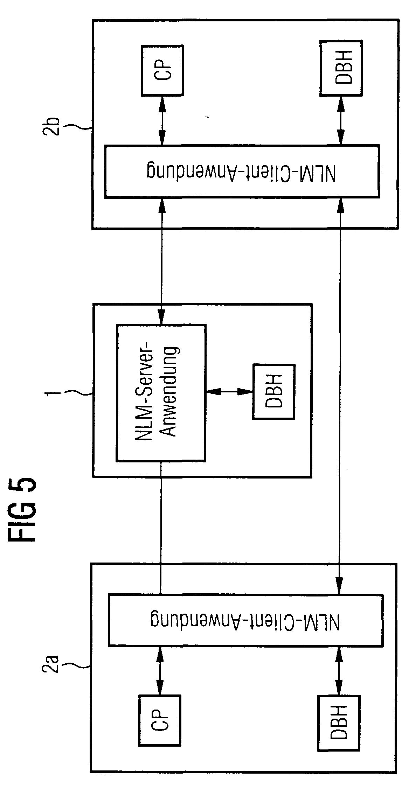

Anhand von Fig. 5 wird nachfolgend die Durchführung von Leistungsmerkmalen näher erläutert, wobei die einzelnen Funktionseinheiten des NLM-Servers 1 und der NLM-Clients 2a, 2b gezeigt werden, die zur Durchführung von Leistungsmerkmalen benötigt werden.

Das sogenannte 'Call Processing' CP ist eine client-interne Software-Schnittstelle, die zur Aktivierung und Durchführung eines NLM-Leistungsmerkmals benötigt wird. Die NLM-Client-Anwendung des jeweiligen NLM-Clients 2a, 2b wandelt die Anreize des Call Processing CP in entsprechende NLM-Meldungen (Signalisierungsmeldungen) um und sendet diese an den NLM-Server 1 mittels entsprechender auf dem IP-Protokoll basierender Kommunikationsmechanismen.

Der NLM-Server 1 wertet die empfangenen NLM-Meldungen aus und leitet entsprechende Aktionen ein, wie z. B. eine Reservierung von Leistungsmerkmal-Objekten, das Versenden weiterer Signalisierungsmeldungen an andere NLM-Clients 2a, 2b, usw. In Fällen, in denen ein weiterer NLM-Client 2a, 2b an der Durchführung eines Leistungsmerkmales beteiligt ist, enthält der NLM-Client 2a, 2b entsprechende Signalisierungsmeldungen zur Aktivierung von Leistungsmerkmalen üblicherweise über den NLM-Server 1. Die jeweilige NLM-Client-Anwendung meldet dies daraufhin entsprechend an das zugehörige Call Processing CP des NLM-Clients 2a, 2b.

Sowohl die NLM-Client-Anwendung als auch die NLM-Server-Anwendung besitzen jeweils Schnittstellen (DBH, Database Handler) zu einer lokalen bzw. zentralen Datenbasis.

Die Signalisierungsmeldungen können dabei abhängig von dem zu realisierenden Leistungsmerkmal zwischen einem NLM-Client 2a, 2b und dem NLM-Server 1 oder zwischen den NLM-Clients 2a, 2b ohne Teilnahme der NLM-Servers 1 ausgetauscht werden.

Bei der Durchführung von Leistungsmerkmalen werden zwei Arten von Signalisierungsmeldungen unterschieden:

Zum einen Signalisierungsmeldungen zur Aktivierung/Freigabe von Leistungsmerkmal-Objekten. Dabei wird ein netzwerkweites Leistungsmerkmal von einem NLM-Client 2a, 2b aktiviert. Der NLM-Client 2a, 2b sendet eine entsprechende Signalisierungsmeldung mit der Leistungsmerkmal-Information an den NLM-Server 1. Durch die Aktivierung des Leistungsmerkmales wird ein Leistungsmerkmal-Objekt im NLM-Server 1 reserviert und der NLM-Client 2a, 2b wird dem sogenannten "Besitzer" des Leistungsmerkmal-Objektes zugeordnet. Lediglich der "Besitzer" (d.h. der betreffende NLM-Client) kann ein Leistungsmerkmal-Objekt wieder freigeben bzw. abschließen.

Zum anderen gibt es Signalisierungsmeldungen zur Kommunikation. Diese Signalisierungsmeldungen werden zwischen mehreren NLM-Clients 2a, 2b oder zwischen einem NLM-Client 2a, 2b und dem NLM-Server 1 ausgetauscht, um bestimmte Aktionen anzustoßen bzw. Quittungen zu erzeugen. Dabei werden keine Leistungsmerkmal-Objekte reserviert oder freigegeben.

Eine Signalisierungsmeldung enthält im wesentlichen Informationen über den Absender (NLM-Client 2a, 2b, NLM-Server 1), den Empfänger (NLM-Server 2a, 2b, NLM-Client 1) und Informationen (die z.B. das zu aktivierende Leistungsmerkmal identifizieren und Zusatzinformationen zu diesem Leistungsmerkmal umfassen) über das jeweilige Leistungsmerkmal-Objekt.

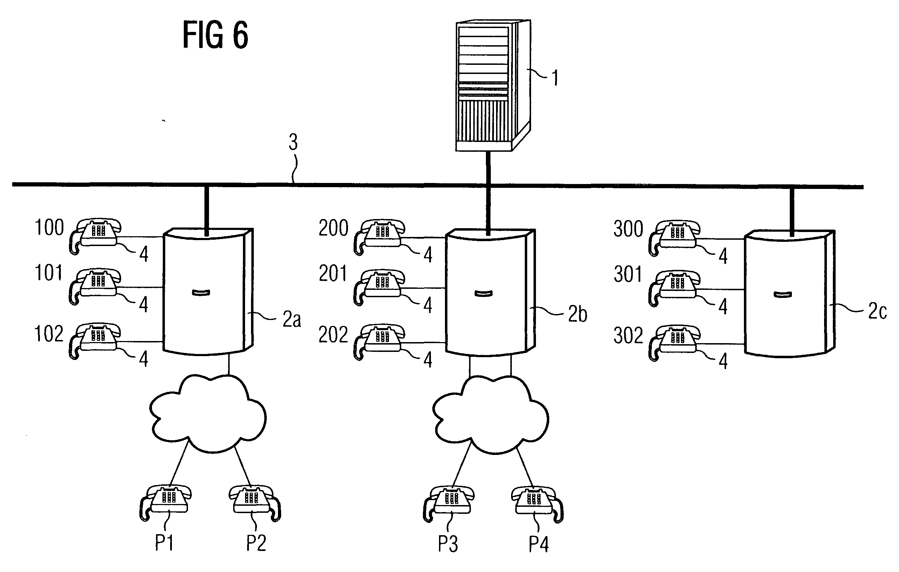

Unter Bezugnahme auf Fig. 6 wird das Prinzip der vorliegenden Erfindung nun anhand von Beispiel-Leistungsmerkmalen verdeutlicht.

Als erstes Beispiel wird nachfolgend das sogenannte Leistungsmerkmal "Parken" und "Übernahme aus Parken" beschrieben. Üblicherweise können mehrere Gespräche (z. B. insgesamt 10) gleichzeitig im Kommunikationssystem geparkt werden. Beim Stand der Technik ist hierfür eine einstellige Parkkennziffer 0...9 für lokales Parken vorgesehen.

Damit das Leistungsmerkmal "Parken" und "Übernahme aus Parken" netzwerkweit zur Verfügung gestellt werden kann, muß dafür gesorgt werden, daß die Parkkennziffer für netzwerkweites Parken eindeutig ist. Hierfür kann die Parkkennziffer entweder außerhalb des Bereichs 0...9 liegen - beispielsweise im Bereich größer 10 - oder der Wertebereich für die Parkkennziffern kann beschränkt und aufgeteilt - beispielsweise 1...5 für lokales Parken und größer 5 für netzwerkweites Parken - werden.

Das dazugehörige, im NLM-Server 1 reservierte, Leistungsmerkmal-Objekt besitzt beispielsweise die folgenden Eigenschaften:
- maximale Anzahl der netzwerkweiten Parkmöglichkeiten,
- erlaubter Kennziffernbereich,
- Leistungsmerkaml "Parken" erlaubt/nicht erlaubt,
- Leistungsmerkmal "Übernahme aus Parken" erlaubt/nicht erlaubt.

Beispielhaft ist ein Teilnehmer P1 (externer Teilnehmer) mit der durch die Durchwahl 100 gekennzeichneten Nebenstelle 4 verbunden. Die Nebenstelle 4 ist an der Kommunikationsanlage 2a angeschlossen. Beim Einparken des Teilnehmers P1 durch die Nebenstelle 4 wird von der NLM-Client-Anwendung der Kommunikationsanlage 2a eine entsprechende NLM-Meldung an die NLM-Server-Anwendung des NLM-Servers 1 gesendet. Im NLM-Server 1 wird das Leistungsmerkmal-Objekt "Parken" mit den oben beschriebenen Eigenschaften erzeugt. Der NLM-Client 2a ist dabei "Besitzer" des Objektes. Die NLM-Server-Anwendung sendet daraufhin Signalisierungsmeldungen ("Parken ein") an die anderen NLM-Clients 2b, 2c, wobei die Signalisierungsmeldungen Informationen über den "Besitzer" des Objektes und die Parkposition - d.h. die Parkkennziffer - enthalten.

Beim Übernehmen (Leistungsmerkmal "Übernahme aus Parken") des Teilnehmers P1 durch die Nebenstelle 4 mit der Durchwahl 200 wird von der NLM-Client-Anwendung des NLM-Clients 2b eine Signalisierungsmeldung an den NLM-Client 2a gesendet mit Angabe des Leistungsmerkmales ("Übernahme") und der Parkposition. Es folgt ein Meldungsverkehr zwischen den NLM-Clients 2a und 2b zur Übergabe des Teilnehmers P1 an der Nebenstelle 200. Weiterhin erfolgt eine Signalisierungsmeldung vom NLM-Client 2a an den NLM-Server 1 zur Freigabe des entsprechenden Leistungsmerkmal-Objektes im NLM-Server 1.

Die beschriebene Variante hat den Vorteil, daß wenig Meldungsverkehr (Signalisierungsmeldungen) zwischen den NLM-Clients 2a,...,2c und dem NLM-Server 1 erzeugt wird, jedoch ist ein höherer Speicherbedarf auf den einzelnen NLM-Clients 2a,...,2c erforderlich.

Bei der nachfolgend beschriebenen alternativen Variante wird auf den einzelnen NLM-Clients 2a,...,2c weniger Speicherbedarf als bei der ersten Variante benötigt. Dabei müssen, nach dem oben beschriebenen Beispiel, die NLM-Clients 2b und 2c nicht die Parkposition und den zugehörigen NLM-Client 2a abspeichern. Beim Ausparken ("Übernahme aus Parken") wird, im Unterschied zum oben beschriebenen Beispiel, eine Signalisierungsmeldung vom NLM-Client 2b an den NLM-Server 1 (zum Signalisieren der Übernahme) gesendet, und nicht zum NLM-Client 2a. Daraufhin wird vom NLM-Server 1 eine Signalisierungsmeldung (zum Signalisieren der Übernahme) an den NLM-Client 2a gesendet. Der weitere Ablauf bleibt wie oben beschrieben. Bei diesem Verfahren ist das Signalisierungsaufkommen zwischen den jeweiligen NLM-Clients 2a,...,2c und dem NLM-Server 1 jedoch höher als bei der ersten Variante. Dafür werden die erforderlichen Daten jedoch zentral im NLM-Server 1 abgespeichert, so daß auf den einzelnen NLM-Clients 2a,...,2c weniger Speicherbedarf benötigt wird. Das Überprüfen der Parkkennziffer erfolgt dann vollständig durch den NLM-Server 1.

Als weiteres Beispiel für netzwerkweite Leistungsmerkmale werden nachfolgend - wiederum unter Bezugnahme auf Fig. 6 - speicherbezogene Leistungsmerkmale beschrieben.

Bei speicherbezogenen Leistungsmerkmalen werden nach Bedarf Daten aus dem NLM-Server 1 in den jeweiligen NLM-Client 2a,...,2c eingelesen. Dadurch wird erreicht, daß die Speicherbelastung der einzelnen NLM-Clients 2a,... 2c, reduziert werden kann, indem Daten zentral (auf dem NLM-Server 1) abgespeichert und behandelt werden. Neben dieser Verlagerung von Funktionen und Speicherzugriffen sind über diese Mechanismen Zugriffe auf neue Daten zur Realisierung neuer Leistungsmerkmale denkbar.

Diese Mechanismen können nur dann ablaufen, wenn das korrespondierende Leistungsmerkmal-Objekt zugelassen wird. Bei nicht zugelassenem netzwerkweitem Leistungsmerkmal läuft, wie beim Stand der Technik, das Leistungsmerkmal lokal auf dem jeweiligen NLM-Client 2a,...,2c ab.

Als Beispiel wird nachfolgend das Leistungsmerkmal "projektbezogene Kennziffer" (PKZ) beschrieben. Das zugehörige, im NLM-Server 1 reservierte, Leistungsmerkmal-Objekt besitzt beispielsweise die folgende Eigenschaft: Zugriff auf das entsprechende Leistungsmerkmal (im Beispiel PKZ) erlaubt/nicht erlaubt. Beim erlaubten Zugriff werden die Kennziffern für dieses Leistungsmerkmal aus dem NLM-Server 1 ausgelesen, bei nicht erlaubtem Zugriff wird die Kennziffer aus dem jeweiligen NLM-Client 2a,...,2c ausgelesen.

Muß z.B. der Teilnehmer der Nebenstelle 4 mit der Durchwahl 100 eine projektbezogene Kennziffer eingeben, um eine Verbindung zu einem öffentlichen Kommunikationsnetz herstellen zu können, findet eine Listenüberprüfung statt. Dabei wird nach Eingabe der entsprechenden projektbezogenen Kennziffer eine Signalisierungsmeldung vom entsprechenden NLM-Client 2a an den NLM-Server 1 gesendet. Im NLM-Server 1 erfolgt eine Überprüfung auf Richtigkeit, wobei eine Reservierung eines Leistungsmerkmal-Objektes nicht notwendig. Daraufhin erfolgt eine Signalisierungsmeldung vom NLM-Server 1 zum NLM-Client 2a, ob die eingegebene projektbezogene Kennziffer mit einer im NLM-Server 1 gespeicherten projektbezogenen Kennziffer übereinstimmt. Ist eine Übereinstimmung gegeben, wird die Durchwahl erlaubt.

Über ähnliche Mechanismen sind weitere speicherbezogene Leistungsmerkmale über den NLM-Server 1 denkbar, wie ein zentrales Kurzwahlziel, Abwesenheitstexte, Mitteilungstexte usw.

Weiterhin ist eine Realisierung einer DISA-Funktionalität möglich. Als Beispiel für DISA-Funktionalitäten sind folgende Leistungsmerkmale zu nennen: Nachtschaltung, Rufzuschaltung, Codeschloß, Anrufschutz, Anrufweiterschaltung, usw.

Durch das Leistungsmerkmal DISA (Direct Inward System Access) können beim Stand der Technik über eine Externverbindung Leistungsmerkmale - wie z. B. eine Rufweiterschaltung - in einer Kommunikationsanlage aktiviert werden. Weiterhin kann mittels des Leistungsmerkmals DISA über die ankommende Externverbindung eine abgehende Externverbindung aufgebaut werden.

Mit Hilfe des erfindungsgemäßen NLM-Server/Client-Konzeptes kann eine DISA-ähnliche Funktionalität mit dem folgenden Merkmal realisiert werden: Sind netzwerkweite DISA-Funktionen nicht aktiviert, dann sind lokale DISA-Funktionen auf den einzelnen NLM-Clients 2a,...,2c weiterhin möglich. Das netzwerkweite DISA kann nur aktiviert werden, wenn das zugehörige Leistungsmerkmal-Paket im NLM-Server 1 aktiviert ist. Ist dieses Paket aktiviert, dann ist der Zugriff auf die lokalen DISA-Funktionen gesperrt.

Bei netzwerkweiter DISA wird im NLM-Client 2a,...,2c nur die Aktivierung bzw. Deaktivierung des Leistungsmerkmals sowie das Schreiben in die Datenbank realisiert. Die weitere Logik - z. B. Zugriffsschutz, Berechtigungsprüfung, Zuordnung, Varianten - findet auf dem NLM-Server 1 statt.

Der Vorteil von netzwerkweiten DISA-Funktionen besteht darin, daß sich der Benutzer keine DISA-Rufnummer des jeweiligen NLM-Clients 2a,...,2c zu merken braucht; er gibt einfach direkt die jeweilige Teilnehmernummer ein. Die Zuordnung zu jeweiligen Ziel wird durch den NLM-Server 1 übernommen; die Notwendigkeit der Einrichtung einer DISA-Rufnummer pro NLM-Client 2a,...,2c entfällt somit.

In einem weiteren Schritt ist es denkbar, die DISA-Funktionen über einen PC am Arbeitsplatz zu steuern. Dieser PC ist mit dem lokalen Netzwerk 3 verbunden und würde entsprechende Signalisierungsmeldungen mit dem NLM-Server 1 austauschen. Somit würde dem Benutzer eine komfortable Bedienoberfläche zur Durchführung dieser Leistungsmerkmale zur Verfügung stehen.

Aufgrund des erfindungsgemäßen NLM-Server/Client-Konzeptes sind weitere, neue netzwerkweite Leistungsmerkmale denkbar, z. B. das Leistungsmerkmal "Komforttermine", wobei ein Teilnehmer die Möglichkeit hat, einen Termin zu programmieren und bei Fälligkeit dieses Termins wird ein Terminruf eingeschaltet. Dabei wird die Terminfunktionalität in dem NLM-Server 1 integriert, indem z.B. ein Termin in den NLM-Server 1 übergeben und bei Fälligkeit dies vom NLM-Server 1 am jeweiligen Endgerät 4 signalisiert wird. Es können somit mehrere Termine mit neuen Merkmalen (einmalig, zyklisch usw.) erzeugt werden. Die Abwicklung bzw. Aktivierung der Leistungsmerkmale zwischen NLM-Server 1 und dem jeweiligen NLM-Client 2a,...,2c erfolgt entsprechend, wie bereits beschrieben.

## Patentansprüche

1. Server (1) für ein Kommunikationsnetz mit mehreren, untereinander vernetzten Kommunikationsanlagen (2) , mit einer ersten Schnittstelle (11) zum Verbinden des Servers (1) mit dem Kommunikationsnetz,
**gekennzeichnet durch**
eine erste Steuerungseinrichtung (12) zum zentralen Steuern von netzweiten Leistungsmerkmalen in dem Kommunikationsnetz.

2. Server (1) gemäß Anspruch 1,
**dadurch gekennzeichnet,**
**daß** die erste Steuerungseinrichtung (12) zur Steuerung der Leistungsmerkmale Signalisierungsmeldungen, die zwischen dem Server (1) und mindestens einer Kommunikationsanlage (2) übertragen werden, generiert bzw. auswertet.

3. Server (1) gemäß Anspruch 1 oder 2,
**dadurch gekennzeichnet,**
**daß** die erste Schnittstelle (11) die Signalisierungsmeldungen zwischen dem Server (1) und der mindestens einen Kommunikationsanlage (2) übertragt.

4. Server (1) gemäß Anspruch 1, 2 oder 3,
**gekennzeichnet durch**
eine Speichervorrichtung (13) zum zentralen Abspeichern von leistungsmerkmal-spezifischen Daten.

5. Server (1) gemäß einem der Ansprüche 1 bis 4,
**dadurch gekennzeichnet,**
**daß** die erste Steuerungseinrichtung (12) die Steuerung von Leistungsmerkmalen durchführt, die eine einzelne Kommunikationsanlage betreffen.

6. Server (1) gemäß einem der Ansprüche 1 bis 5,
**dadurch gekennzeichnet,**
**daß** die erste Steuerungseinrichtung (12) die Steuerung von Leistungsmerkmalen durchführt, die gleichzeitig mehrere Kommunikationsanlagen betreffen.

7. Server (1) gemäß einem der Ansprüche 1 bis 6,
**dadurch gekennzeichnet,**
**daß** die erste Schnittstelle (11) eine Verbindung zwischen dem Server (1) und der Kommunikationsanlage (2) über ein lokales Netzwerk (3) herstellt, wobei die Datenübertragung mittels des IP-Protokolls (Internet Protokoll) stattfindet.

8. Kommunikationsanlage (2) zur Verwendung mit einem Server (1) gemäß einem der Ansprüche 1 bis 7, mit einer zweiten Schnittstelle (21) zum Verbinden der Kommunikationsanlage (2) mit dem Kommunikationsnetz,
**gekennzeichnet durch**
eine zweite Steuerungseinrichtung (22), die Leistungsmerkmale in dem Kommunikationsnetz unter Verwendung des Servers (1) steuert.

9. Kommunikationsanlage (2) gemäß Anspruch 8,
**dadurch gekennzeichnet,**
**daß** die zweite Steuerungseinrichtung (22) zur Steuerung der Leistungsmerkmale Signalisierungsmeldungen, die zwischen dem Server (1) und der Kommunikationsanlage (2) übertragen werden, generiert bzw. auswertet.

10. Telekommunikationsanlage (2) gemäß Anspruch 8 oder 9,
**dadurch gekennzeichnet,**
**daß** die zweite Schnittstelle (21) die Signalisierungsmeldungen zwischen der Kommunikationsanlage (2) und dem Server (1) überträgt.

11. Telekommunikationsanlage (2) gemäß Anspruch 8, 9 oder 10,
**dadurch gekennzeichnet,**
**daß** die zweite Schnittstelle (21) eine Verbindung zwischen dem Server (1) und der Kommunikationsanlage (2) über ein lokales Netzwerk (3) herstellt, wobei die Datenübertragung mittels IP-Protokoll (Internet Protokoll) stattfindet.

12. Verfahren zur Steuerung von Leistungsmerkmalen in einem Kommunikationsnetz mit mehreren, untereinander vernetzten Kommunikationsanlagen,
**dadurch gekennzeichnet,**
**daß** die Leistungsmerkmale in dem Kommunikationsnetz zentral von einem Server (1) gesteuert werden.

13. Verfahren gemäß Anspruch 12,
**dadurch gekennzeichnet,**
**daß** für eine Realisierung von netzweiten Leistungsmerkmalen Signalisierungsmeldungen zwischen dem Server (1) und mindestens einer Kommunikationsanlage (2) übertragen werden.

14. Verfahren gemäß Anspruch 12 oder 13,
**dadurch gekennzeichnet,**
**daß** im Server (1) und in den Kommunikationsanlagen (2) leistungsmerkmal-spezifische Daten zentral gespeichert werden.

15. Verfahren gemäß einem der Ansprüche 12 bis 14,
**dadurch gekennzeichnet,**
**daß** eine zentrale Steuerung von Leistungsmerkmalen durchgeführt wird, die eine einzelne Kommunikationsanlage (2) betreffen.

16. Verfahren gemäß einem der Ansprüche 12 bis 15,
**dadurch gekennzeichnet,**
**daß** eine zentrale Steuerung von Leistungsmerkmalen durchgeführt wird, die gleichzeitig mehrere Kommunikationsanlagen (2) betreffen.

17. Verfahren gemäß einem der Ansprüche 12 bis 16,
**dadurch gekennzeichnet,**
**daß** das Verfahren in einem privaten Kommunikationsnetz durchgeführt wird.
